# EUROPÄISCHE PATENTSCHRIFT

(11) **EP 2 625 777 B1**
(45) Veröffentlichungstag und Bekanntmachung des Hinweises auf die Patenterteilung: **08.11.2017**
(21) Anmeldenummer: 11760491.8
(22) Anmeldetag: 26.09.2011
(51) Int. Cl.: H02M 7/06, H02M 7/48, H02M 1/34, H02M 1/32

(54) **UMRICHTERSCHALTUNG**
CONVERTER CIRCUIT
CIRCUIT CONVERTISSEUR

(30) Priorität: 05.10.2010 EP 10186492
(43) Veröffentlichungstag der Anmeldung: 14.08.2013
(73) Patentinhaber: ABB Schweiz AG, 5400 Baden (CH)
(72) Erfinder: DAMAZIO-COELHO, Kefas, CH-5415 Nussbaumen (CH); LUESCHER, Matthias, CH-5728 Gontenschwil (CH); APELDOORN, Oscar, CH-5426 Lengnau (CH); BERNER, Thomas, 79761 Waldshut-Tiengen (DE)
(74) Vertreter: ABB Patent Attorneys
(86) Internationale Anmeldenummer: PCT/EP2011/066630
(87) Internationale Veröffentlichungsnummer: WO 2012/045602

(56) Entgegenhaltungen:
- EP-A2- 0 776 083
- EP-A2- 1 619 785
- US-A- 5 982 646
- US-B1- 6 452 815
- DOS SANTOS M E ET AL: "Short circuit and overcurrent protection of IGCT-based three level NPC inverters", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, 20. Juni 2004 (2004-06-20), Seiten 3553-3558, XP010739484, ISBN: 978-0-7803-8399-9
- LIQIANG YUAN ET AL: "Snubberless Switching-off Characteristics of IGCTs Equipped in High Power Three-level Neutral Point Clamped Converters", ELECTRICAL MACHINES AND SYSTEMS, 2005. ICEMS 2005. PROCEEDINGS OF THE EIGHTH INTERNATIONAL CONFERENCE ON NANJING, CHINA 27-29 SEPT. 2005, PISCATAWAY, NJ, USA,IEEE, Bd. 2, 27. September 2005 (2005-09-27), Seiten 1257-1260, XP010877703, ISBN: 978-7-5062-7407-4
- ZUCKERBERGER A ET AL: "Design, simulation and realization of high power NPC converters equipped with IGCTs", INDUSTRY APPLICATIONS CONFERENCE, 1998. THIRTY-THIRD IAS ANNUAL MEETIN G. THE 1998 IEEE ST. LOUIS, MO, USA 12-15 OCT. 1998, NEW YORK, NY, USA,IEEE, US, Bd. 2, 12. Oktober 1998 (1998-10-12), Seiten 865-872, XP010312970, DOI: DOI:10.1109/IAS.1998.730247 ISBN: 978-0-7803-4943-8
- STEFFEN BERNET: "Recent Developments of High Power Converters for Industry and Traction Applications", IEEE TRANSACTIONS ON POWER ELECTRONICS, INSTITUTE OF ELECTRICAL AND ELECTRONICS ENGINEERS, USA, vol. 15, no. 6, 1 November 2000 (2000-11-01), XP011043485, ISSN: 0885-8993

## Beschreibung

### Technisches Gebiet

Die Erfindung bezieht sich auf das Gebiet der Leistungselektronik. Sie geht aus von einer Umrichterschaltung gemäss dem Oberbegriff des unabhängigen Anspruchs.

### Stand der Technik

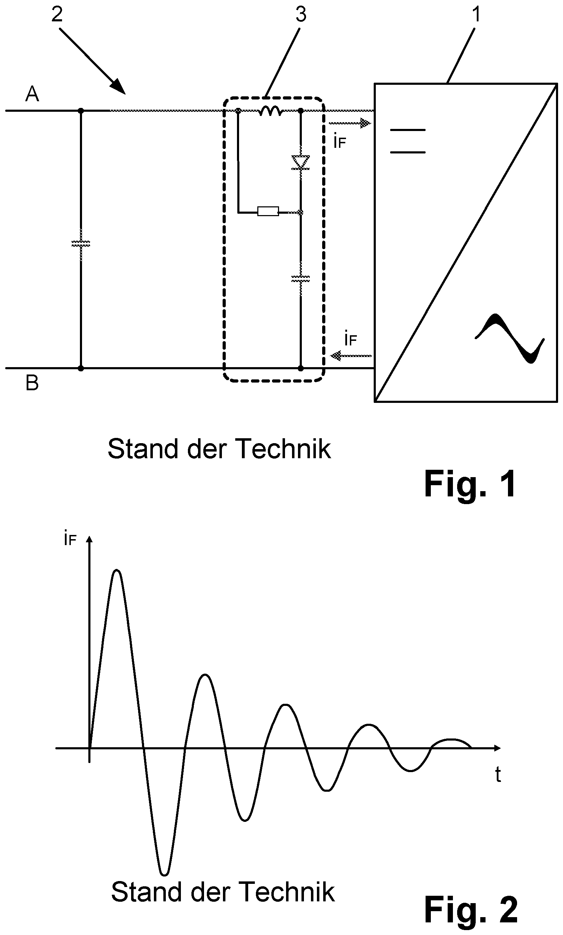

Umrichterschaltungen werden heute in einer Vielzahl von Anwendungen eingesetzt. In Fig. 1 ist eine gattungsgemässe Umrichterschaltung nach dem Stand der Technik dargestellt. Typischerweise umfasst die Umrichterschaltung darin einen kapazitiven Energiespeicherkreis 2, der mindestens einen kapazitiven Energiespeicher aufweist. Desweiteren weist die Umrichterschaltung eine Umrichtereinheit 1 auf, deren Gleichspannungsseite mit dem kapazitiven Energiespeicherkreis 2 verbunden ist. Eine solche Umrichtereinheit dient beispielsweise der Speisung einer elektrischen Last, die zum Beispiel weine Wechselspannung benötigt. Die Umrichtereinheit 1 selbst weist eine Vielzahl ansteuerbarer Leistungshalbleiterschalter auf, die zu für den Fachmann bekannte Schaltungen wie beispielweise Halbrücken- oder Vollbrückenschaltungen verschaltet sind.

Darüberhinaus umfasst der kapazitive Energiespeicherkreis 2 zusätzlich mindestens ein Entlastungsnetzwerk 3 (sog. Snubber-Schaltung), um störende Hochfrequenz- oder Spannungsspitzen an den ansteuerbaren Leistungshalbleiterschaltern der Umrichtereinheit 1 gering zu halten, die beim Schalten der ansteuerbaren Leistungshalbleiterschalter auftreten können. Demzufolge bewirkt ein solches Entlastungsnetzwerk 3 eine Begrenzung der Strom- bzw. der Spannungs-Anstiegsgeschwindigkeit an den ansteuerbaren Leistungshalbleiterschaltern der Umrichtereinheit 1, wie z.B. Thyristoren, IGBTs, IGCTs und dergleichen. Gemäss Fig. 1 umfasst das Entlastungsnetzwerk typischerweise einen Widerstand, eine Induktivität, eine Kapazität und eine Diode, wobei die vorstehend genannten Bauelemente dann üblicherweise in der nach Fig. 1 gezeigten Art verschaltet sind.

Tritt nun ein Überstrom i_{F}, beispielsweise infolge eines Fehlers in der Umrichtereinheit 1, auf, so stellen der mindestens eine kapazitive Energiespeicher und die Kapazität des Entlastungsnetzwerkes 3 zusammen mit der Induktivität des Entlastungsnetzwerkes 3 einen Schwingkreis dar, der zu einer Schwingung des Überstromes i_{F} mit grosser Amplitude führt und nur langsam abklingt. Eine solche Schwingung ist im zeitlichen Verlauf des Überstromes i_{F} beispielhaft in Fig. 2 dargestellt. Gerade diese Schwingung des Überstromes i_{F} kann aber die ansteuerbaren Leistungshalbleiterschalter der Umrichtereinheit 1 schädigen oder gar zerstören und ist demnach hochgradig unerwünscht.

In der EP 1 619 785 A2 ist eine gattungsgemässe Umrichterschaltung angegeben, die ein Entlastungsnetzwerk mit einem Widerstand, einer Induktivität, einer Kapazität und mit einer Diode aufweist. Eine zur Dämpfung der vorstehend genannten Schwingung eines auftretenden Überstromes ist nicht vorgesehen.

### Darstellung der Erfindung

Aufgabe der Erfindung ist es deshalb, eine Umrichterschaltung anzugeben, bei welcher bei auftreten eines Überstromes im kapazitiven Energiespeicherkreis Schwingungen des Überstromes weitestgehend vermieden werden können.

Diese Aufgabe wird durch die Merkmale des Anspruchs 1 gelöst. In den abhängigen Ansprüchen sind vorteilhafte Weiterbildungen der Erfindung angegeben.

Die erfindungsgemässe Umrichterschaltung umfasst eine Umrichtereinheit, die eine Vielzahl ansteuerbarer Leistungshalbleiterschalter aufweist und deren Gleichspannungsseite mit einem kapazitiven Energiespeicherkreis verbunden ist. Der kapazitive Energiespeicherkreis weist mindestens einen kapazitiven Energiespeicher und mindestens ein Entlastungsnetzwerk zur Begrenzung der Strom- bzw. der Spannungs-Anstiegsgeschwindigkeit an den ansteuerbaren Leistungshalbleiterschaltern der Umrichtereinheit auf. Nach der Erfindung weist der kapazitive Energiespeicherkreis mindestens eine passive nicht ansteuerbare Dämpfungseinheit mit unidirektionaler Stromführungsrichtung auf, wobei die passive nicht ansteuerbare Dämpfungseinheit eine Diode und einen Dämpfungswiderstand aufweist. Desweiteren weist das Entlastungsnetzwerk einen Widerstand, eine Induktivität, eine Kapazität und eine Diode, wobei der Widerstand des Entlastungsnetzwerkes und die Diode des Entlastungsnetzwerkes in Serie geschaltet sind, die Serienschaltung des Widerstands des Entlastungsnetzwerkes mit der Diode des Entlastungsnetzwerkes parallel zu der Induktivität des Entlastungsnetzwerkes geschaltet ist und die Kapazität des Entlastungsnetzwerkes mit dem Verbindungspunkt des Widerstands des Entlastungsnetzwerkes mit der Diode des Entlastungsnetzwerkes verbunden ist. Insgesamt ist also eine separate Diode des passiven nicht ansteuerbare Dämpfungseinheit und zudem eine separate Diode des Entlastungsnetzwerkes vorgesehen.

Tritt nun ein Überstrom im kapazitiven Energiespeicherkreis auf, der normalerweise unerwünschte Schwingungen aufweist, so werden diese Schwingungen des Überstromes durch die passive nicht ansteuerbare Dämpfungseinheit gedämpft und die Schwingungen des Überstromes somit erfolgreich reduziert. Desweiteren ist die passive nicht ansteuerbare Dämpfungseinheit durch die Diode und den Dämpfungswiderstand denkbar einfach aufgebaut, ist somit sehr robust und kostengünstig und lässt sich demzufolge sehr einfach realisieren und beispielsweise in bestehende Umrichterschaltungen nachrüsten.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnung

Es zeigen:
- Fig. 1: eine Ausführungsform einer Umrichterschaltung nach dem Stand der Technik,
- Fig. 2: ein zeitlicher Verlauf eines Überstromes im kapazitiven Energiespeicherkreis der Umrichterschaltung gemäss Fig. 1,
- Fig. 3: eine erste Ausführungsform einer erfindungsgemässen Umrichterschaltung,
- Fig. 4: eine zweite Ausführungsform einer erfindungsgemässen Umrichterschaltung
- Fig. 5: eine dritte Ausführungsform einer erfindungsgemässen Umrichterschaltung,
- Fig. 6: eine vierte Ausführungsform einer erfindungsgemässen Umrichterschaltung und
- Fig. 7: ein zeitlicher Verlauf eines Überstromes im kapazitiven Energiespeicherkreis der Umrichterschaltung gemäss Fig. 3.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

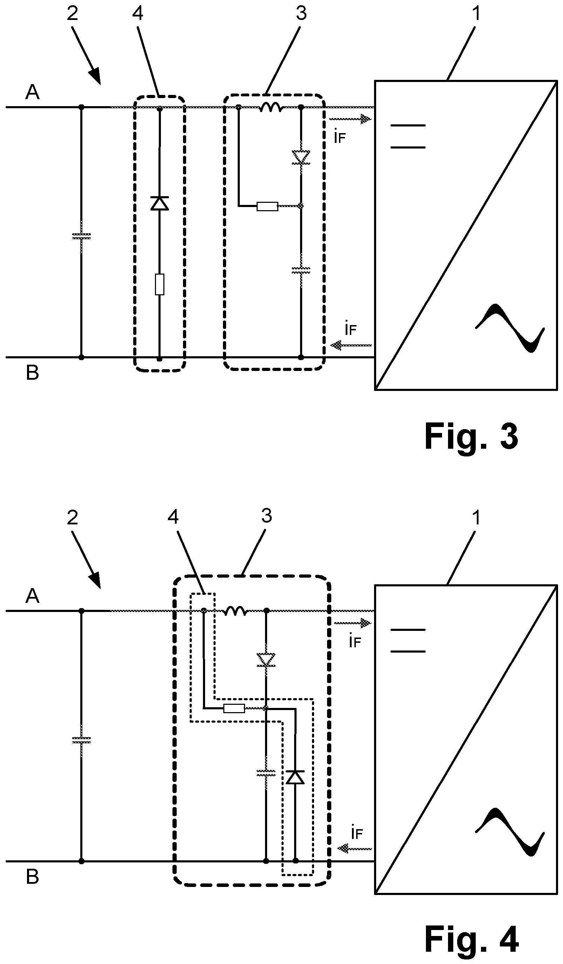

In Fig.1 ist eine Ausführungsform der eingangs bereits erwähnten gängigen Umrichterschaltung nach dem Stand der Technik dargestellt. Fig. 2 zeigt dazu einen zeitlichen Verlauf eines Überstromes i_{F} im kapazitiven Energiespeicherkreis 2 der Umrichterschaltung Fig. 1. In Fig. 3 ist nun eine erste Ausführungsform einer erfindungsgemässen Umrichterschaltung dargestellt. Allgemein umfasst die Umrichterschaltung eine Umrichtereinheit 1, welche Umrichtereinheit 1 eine Vielzahl ansteuerbarer Leistungshalbleiterschalter aufweist. Ein solcher ansteuerbare Leistungshalbleiterschalter kann dann beispielsweise als Abschaltthyristor (GTO - Gate Turn-Off Thyristor), als integrierter Thyristor mit kommutierter Ansteuerelektrode (IGCT - Integrated Gate Commutated Thyristor), als Leistungs-MOSFET oder als Bipolartransistor mit isoliert angeordneter Gateelektrode (IGBT) ausgebildet sein. Die Gleichspannungsseite der Umrichtereinheit 1 ist mit einem kapazitiven Energiespeicherkreis 2 verbunden, wobei der kapazitive Energiespeicherkreis 2 allgemein mindestens einen kapazitiven Energiespeicher und mindestens ein Entlastungsnetzwerk 3 zur Begrenzung der Strom- bzw. der Spannungs-Anstiegsgeschwindigkeit an den ansteuerbaren Leistungshalbleiterschaltern der Umrichtereinheit 1 aufweist. In der ersten Ausführungsform nach Fig. 3 ist ein einziger kapazitiven Energiespeicher und ein einziges Entlastungsnetzwerk 3 vorgesehen. Erfindungsgemäss weist der kapazitive Energiespeicherkreis 2 allgemein mindestens eine passive nicht ansteuerbare Dämpfungseinheit 4 mit unidirektionaler Stromführungsrichtung aufweist, wobei die passive nicht ansteuerbare Dämpfungseinheit 4 eine Diode und einen Dämpfungswiderstand aufweist. In der ersten Ausführungsform nach Fig. 3 ist eine einzige passive nicht ansteuerbare Dämpfungseinheit 4 vorgesehen. Desweiteren weist das Entlastungsnetzwerk 3, insbesondere nach Fig. 3, einen Widerstand, eine Induktivität, eine Kapazität und eine Diode, wobei der Widerstand des Entlastungsnetzwerkes 3 und die Diode des Entlastungsnetzwerkes 3 in Serie geschaltet sind, die Serienschaltung des Widerstands des Entlastungsnetzwerkes 3 mit der Diode des Entlastungsnetzwerkes 3 parallel zu der Induktivität des Entlastungsnetzwerkes 3 geschaltet ist und die Kapazität des Entlastungsnetzwerkes 3 mit dem Verbindungspunkt des Widerstands des Entlastungsnetzwerkes 3 mit der Diode des Entlastungsnetzwerkes 3 verbunden ist. Insgesamt ist also eine separate Diode des passiven nicht ansteuerbare Dämpfungseinheit 4 und zudem eine separate Diode des Entlastungsnetzwerkes 3 vorgesehen.

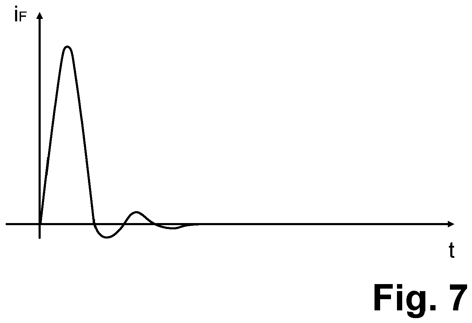

Bei Auftreten eines Überstromes i_{F} im kapazitiven Energiespeicherkreis 2 werden Schwingungen des Überstromes i_{F}, wie sie typischerweise bei gängigen Umrichterschaltungen auftreten, durch die passive nicht ansteuerbare Dämpfungseinheit 4 erfolgreich gedämpft und die Schwingungen des Überstromes i_{F} somit reduziert. Durch die Diode der passiven nicht ansteuerbaren Dämpfungseinheit 4 hat der schwingende Überstrom i_{F}, insbesondere in leitender Richtung der Diode, nämlich mit Vorteil einen Strompfad über den Dämpfungswiderstand, der dann die Schwingungen des Überstromes i_{F} in gewünschter Weise dämpft. In Fig. 7 ist dazu beispielhaft die angesprochene Dämpfung des Überstromes i_{F} in einem zeitlichen Verlauf des Überstromes i_{F} der Umrichterschaltung gemäss Fig. 3 gezeigt. Ferner ist die passive nicht ansteuerbare Dämpfungseinheit 4 durch die Diode und den Dämpfungswiderstand denkbar einfach aufgebaut, ist demzufolge sehr robust und kostengünstig und lässt sich damit sehr einfach realisieren. Zudem eignet sich die passive nicht ansteuerbare Dämpfungseinheit 4 besonders für die Nachrüstung in bestehende Umrichterschaltungen.

Der Dämpfungswiderstand kann ein diskretes Bauelement sein, oder aber auch durch Verwendung von Widerstandsmaterial in der Zuleitung zum Widerstand gebildet sein.

Vorzugsweise ist die Diode der passiven nicht ansteuerbaren Dämpfungseinheit 4 in Serie zu dem Dämpfungswiderstand der passiven nicht ansteuerbaren Dämpfungseinheit 4 geschaltet, wie dies beispielhaft in der ersten Ausführungsform gemäss Fig. 3 gezeigt ist.

Im Falle eines kapazitiven Energiespeicherkreises 2 mit einem ersten und einem zweiten Spannungspotenzial A, B, wie beispielhaft in Fig. 3 gezeigt, ist das Entlastungsnetzwerk 3 mit dem ersten und zweiten Spannungspotenzial A, B des kapazitiven Energiespeicherkreises 2 verbunden. Als erstes Spannungspotenzial A wird beispielsweise ein positives Spannungspotential und als zweites Spannungspotenzial B dann ein negatives Spannungspotential desselben Wertes gewählt. Die passive nicht ansteuerbare Dämpfungseinheit 4 ist dann, wie in Fig. 3 beispielhaft gezeigt, mit dem ersten und zweiten Spannungspotenzial A, B des kapazitiven Energiespeicherkreises 2 verbunden. Die Verschaltung der einzelnen vorstehend genannten Bauelemente des Entlastungsnetzwerkes 3 wurde bereits vorstehend beschrieben. Die Einschaltung des Entlastungsnetzwerkes 3 zwischen dem ersten und zweiten Spannungspotential A, B erfolgt beispielhaft nach der in Fig. 3 gezeigten Art.

Im Unterschied zur ersten Ausführungsform nach Fig. 3 ist einer zweiten Ausführungsform der erfindungsgemässen Umrichterschaltung nach Fig. 4 der Dämpfungswiderstand der passiven nicht ansteuerbaren Dämpfungseinheit 4 der Widerstand des Entlastungsnetzwerkes 3. Durch diese Massnahme kann vorteilhaft der bereits vorhandene Widerstand des Entlastungsnetzwerkes 3 als Dämpfungswiderstand genutzt werden, wodurch ein zusätzlicher diskreter Dämpfungswiderstand entfallen und somit Bauelementkosten, Platz und Montageaufwand reduziert werden kann. Das Entlastungsnetzwerk 3 gemäss Fig. 4 weist ebenfalls einen Widerstand, eine Induktivität, eine Kapazität und eine Diode auf. Die Verschaltung der einzelnen vorstehend genannten Bauelemente des Entlastungsnetzwerkes 3 zwischen dem ersten und zweiten Spannungspotential A, B erfolgt beispielhaft nach der in Fig. 4 gezeigten Art. Auch für die Ausführungsform nach Fig. 4 erlaubt die Diode der passiven nicht ansteuerbaren Dämpfungseinheit 4 dem schwingenden Überstrom i_{F} einen Strompfad über den Dämpfungswiderstand, der dann die Schwingungen des Überstromes i_{F} in gewünschter Weise dämpft.

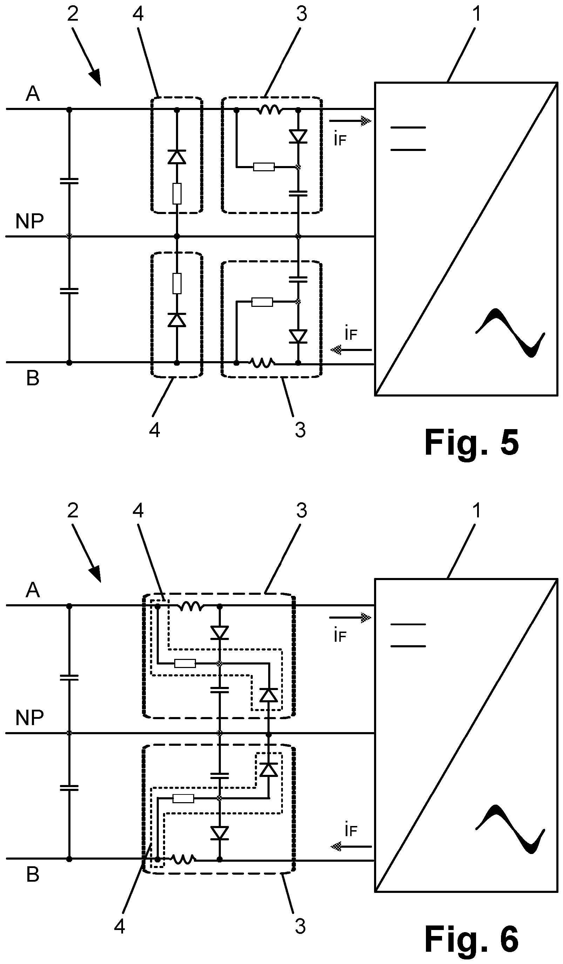

Im Falle eines kapazitiven Energiespeicherkreises 2 mit einem ersten und einem zweiten Spannungspotenzial A, B, wie vorstehend bereits beschrieben, und einem zusätzlichen Spannungsnullpotenzial NP sind zwei Entlastungsnetzwerke 3 und zwei passive nicht ansteuerbare Dämpfungseinheiten 4 vorgesehen. Das Spannungsnullpotential NP liegt vorzugsweise wertemässig genau zwischen dem ersten und dem zweiten Spannungspotential A, B und weist somit beispielsweise bei einem positiven ersten Spannungspotential A und einem negativen zweiten Spannungspotenzial B desselben Wertes dann wertemässig ein Potential von 0V auf. Fig. 5 zeigt beispielhaft eine dritte Ausführungsform der erfindungsgemässen Umrichterschaltung, bei dem der kapazitive Energiespeicherkreis 2 mit einem ersten und einem zweiten Spannungspotenzial A, B und einem zusätzlichen Spannungsnullpotenzial NP ausgebildet ist. Gemäss Fig. 5 ist eines der Entlastungsnetzwerke 3 mit dem ersten Spannungspotenzial A des kapazitiven Energiespeicherkreises 2 und dem Nullspannungspotential NP des kapazitiven Energiespeicherkreises 2 verbunden und das andere der Entlastungsnetzwerke 3 ist mit dem zweiten Spannungspotenzial B des kapazitiven Energiespeicherkreises 2 und dem Nullspannungspotential NP des Energiespeicherkreises 2 verbunden. Zudem ist eine der passiven nicht ansteuerbaren Dämpfungseinheiten 4 mit dem ersten Spannungspotenzial A des kapazitiven Energiespeicherkreises 2 und dem Nullspannungspotential NP des kapazitiven Energiespeicherkreises 2 verbunden und die andere der passiven nicht ansteuerbaren Dämpfungseinheiten 4 ist mit dem zweiten Spannungspotenzial B des kapazitiven Energiespeicherkreises 2 und dem Nullspannungspotential NP des kapazitiven Energiespeicherkreises 2 verbunden. Vorzugsweise ist die Diode der jeweiligen passiven nicht ansteuerbaren Dämpfungseinheit 4 in Serie zu dem Dämpfungswiderstand der zugehörigen passiven nicht ansteuerbaren Dämpfungseinheit 4 geschaltet, wie dies beispielhaft in der dritten Ausführungsform gemäss Fig. 5 gezeigt ist. Auch für die Ausführungsform nach Fig. 5 erlaubt die Diode des jeweiligen passiven nicht ansteuerbaren Dämpfungseinheit 4 dem schwingenden Überstrom i_{F} einen Strompfad über den jeweiligen Dämpfungswiderstand, der dann die Schwingungen des Überstromes i_{F} in gewünschter Weise dämpft. Die Einschaltung der einzelnen Entlastungsnetzwerke 3 zwischen dem ersten bzw. zweiten Spannungspotential A, B und dem Spannungsnullpotenzial NP erfolgt beispielhaft nach der in Fig. 5 gezeigten Art.

Im Unterschied zur dritten Ausführungsform nach Fig. 5 ist einer vierten Ausführungsform der erfindungsgemässen Umrichterschaltung nach Fig. 6 der der Dämpfungswiderstand jeweils einer der passiven nicht ansteuerbaren Dämpfungseinheit 4 der Widerstand jeweils eines der Entlastungsnetzwerke 3. Durch diese Massnahme kann vorteilhaft der bereits vorhandene Widerstand des jeweiligen Entlastungsnetzwerkes 3 als Dämpfungswiderstand genutzt werden, wodurch ein zusätzlicher diskreter Dämpfungswiderstand entfallen und somit Bauelementkosten, Platz und Montageaufwand reduziert werden kann. Auch für die Ausführungsform nach Fig. 6 erlaubt die Diode des jeweiligen passiven nicht ansteuerbaren Dämpfungseinheit 4 dem schwingenden Überstrom i_{F} einen Strompfad über den jeweiligen Dämpfungswiderstand, der dann die Schwingungen des Überstromes i_{F} in gewünschter Weise dämpft. Wie in Fig. 6 beispielhaft gezeigt, weist das jeweilige Entlastungsnetzwerk 3 ebenfalls einen Widerstand, eine Induktivität, eine Kapazität und eine Diode auf, wobei die Verschaltung der einzelnen vorstehend genannten Bauelemente des jeweiligen Entlastungsnetzwerkes 3 zwischen dem ersten bzw. zweiten Spannungspotential A, B und dem Spannungsnullpotenzial NP beispielhaft nach der in Fig. 6 gezeigten Art erfolgt.

### Bezugszeichenliste

- 1: Umrichtereinheit
- 2: kapazitiver Energiespeicherkreis
- 3: Entlastungsnetzwerk
- 4: passive nicht ansteuerbare Dämpfungseinheit
- A: erstes Spannungspotential
- B: zweites Spannungspotential
- NP: Spannungsnullpotenzial

## Patentansprüche

1. Umrichterschaltung mit einer Umrichtereinheit (1), welche Umrichtereinheit (1) eine Vielzahl ansteuerbarer Leistungshalbleiterschalter aufweist und deren Gleichspannungsseite mit einem kapazitiven Energiespeicherkreis (2) verbunden ist, wobei der kapazitive Energiespeicherkreis (2) mindestens einen kapazitiven Energiespeicher und mindestens ein Entlastungsnetzwerk (3) zur Begrenzung der Strom- bzw. der Spannungs-Anstiegsgeschwindigkeit an den ansteuerbaren Leistungshalbleiterschaltern der Umrichtereinheit (1) aufweist,
**dadurch gekennzeichnet,**
**dass** der kapazitive Energiespeicherkreis (2) mindestens eine passive nicht ansteuerbare Dämpfungseinheit (4) mit unidirektionaler Stromführungsrichtung aufweist, wobei die passive nicht ansteuerbare Dämpfungseinheit (4) der Dämpfung unerwünschter Schwingungen bei Auftreten eines Überstromes im kapazitiven Energiespeicherkreis (2) dient und die passive nicht ansteuerbare Dämpfungseinheit (4) eine Diode und einen Dämpfungswiderstand aufweist,
**dass** das Entlastungsnetzwerk (3) einen Widerstand, eine Induktivität, eine Kapazität und eine Diode aufweist, wobei der Widerstand des Entlastungsnetzwerkes (3) und die Diode des Entlastungsnetzwerkes (3) in Serie geschaltet sind, die Serienschaltung des Widerstands des Entlastungsnetzwerkes (3) mit der Diode des Entlastungsnetzwerkes (3) parallel zu der Induktivität des Entlastungsnetzwerkes (3) geschaltet ist und die Kapazität des Entlastungsnetzwerkes (3) mit dem Verbindungspunkt des Widerstands des Entlastungsnetzwerkes (3) mit der Diode des Entlastungsnetzwerkes (3) verbunden ist.

2. Umrichterschaltung nach Anspruch 1, **dadurch gekennzeichnet, dass** die Diode der passiven nicht ansteuerbaren Dämpfungseinheit (4) in Serie zu dem Dämpfungswiderstand der passiven nicht ansteuerbaren Dämpfungseinheit (4) geschaltet ist.

3. Umrichterschaltung nach Anspruch 1 oder 2, **dadurch gekennzeichnet, dass** im Falle eines kapazitiven Energiespeicherkreises (2) mit einem ersten und einem zweiten Spannungspotenzial (A, B) das Entlastungsnetzwerk (3) mit dem ersten und zweiten Spannungspotenzial (A, B) des kapazitiven Energiespeicherkreises (2) verbunden ist, und
dass die passive nicht ansteuerbare Dämpfungseinheit (4) mit dem ersten und zweiten Spannungspotenzial (A, B) des kapazitiven Energiespeicherkreises (2) verbunden ist.

4. Umrichterschaltung nach einem der Ansprüche 1 bis 3, **dadurch gekennzeichnet, dass** der Dämpfungswiderstand der passiven nicht ansteuerbaren Dämpfungseinheit (4) der Widerstand des Entlastungsnetzwerkes (3) ist.

5. Umrichterschaltung nach Anspruch 1, **dadurch gekennzeichnet, dass** im Falle eines kapazitiven Energiespeicherkreises (2) mit einem ersten und einem zweiten Spannungspotenzial (A, B) und einem Spannungsnullpotenzial (NP) zwei Entlastungsnetzwerke (3) und zwei passive nicht ansteuerbare Dämpfungseinheiten (4) vorgesehen sind,
dass eines der Entlastungsnetzwerke (3) mit dem ersten Spannungspotenzial (A) des kapazitiven Energiespeicherkreises (2) und dem Nullspannungspotential (NP) des kapazitiven Energiespeicherkreises (2) verbunden ist und das andere der Entlastungsnetzwerke (3) mit dem zweiten Spannungspotenzial (B) des kapazitiven Energiespeicherkreises (2) und dem Nullspannungspotential (NP) des kapazitiven Energiespeicherkreises (2) verbunden ist,
dass eine der passiven nicht ansteuerbaren Dämpfungseinheiten (4) mit dem ersten Spannungspotenzial (A) des kapazitiven Energiespeicherkreises (2) und dem Nullspannungspotential (NP) des kapazitiven Energiespeicherkreises (2) verbunden ist und die andere der passiven nicht ansteuerbaren Dämpfungseinheiten (4) mit dem zweiten Spannungspotenzial (B) des kapazitiven Energiespeicherkreises (2) und dem Nullspannungspotential (NP) des kapazitiven Energiespeicherkreises (2) verbunden ist.

6. Umrichterschaltung nach Anspruch 5, **dadurch gekennzeichnet, dass** der Dämpfungswiderstand jeweils einer der passiven nicht ansteuerbaren Dämpfungseinheit (4) der Widerstand jeweils eines der Entlastungsnetzwerke (3) ist.

## Claims

1. Converter circuit having a converter unit (1), which converter unit (1) has a multiplicity of actuatable power semiconductor switches, and the DC voltage side of which is connected to a capacitive energy storage circuit (2), wherein the capacitive energy storage circuit (2) has at least one capacitive energy store and at least one snubber network (3) for limiting the rate of current or voltage rise on the actuatable power semiconductor switches of the converter unit (1),
**characterized**
**in that** the capacitive energy storage circuit (2) has at least one passive nonactuatable damping unit (4) having a unidirectional current-flow direction, wherein the passive nonactuable damping unit (4) is used for damping undesirable oscillations in the event of an overcurrent occurring in the capacitive energy storage circuit (2) and the passive nonactuatable damping unit (4) has a diode and a damping resistor,
**in that** the snubber network (3) has a resistor, an inductance, a capacitance and a diode, wherein the resistor of the snubber network (3) and the diode of the snubber network (3) are connected in series, the series circuit comprising the resistor of the snubber network (3) and the diode of the snubber network (3) is connected in parallel with the inductance of the snubber network (3), and the capacitance of the snubber network (3) is connected to the connecting point between the resistor of the snubber network (3) and the diode of the snubber network (3).

2. Converter circuit according to Claim 1, **characterized in that** the diode of the passive nonactuatable damping unit (4) is connected in series with the damping resistor of the passive nonactuatable damping unit (4).

3. Converter circuit according to Claim 1 or 2, **characterized in that** in the case of a capacitive energy storage circuit (2) having a first and a second voltage potential (A, B), the snubber network (3) is connected to the first and second voltage potentials (A, B) of the capacitive energy storage circuit (2), and **in that** the passive nonactuatable damping unit (4) is connected to the first and second voltage potentials (A, B) of the capacitive energy storage circuit (2).

4. Converter circuit according to one of Claims 1 to 3, **characterized in that** the damping resistor of the passive nonactuatable damping unit (4) is the resistor of the snubber network (3).

5. Converter circuit according to Claim 1, **characterized in that** in the case of a capacitive energy storage circuit (2) having a first and a second voltage potential (A, B) and a voltage zero potential (NP), two snubber networks (3) and two passive nonactuatable damping units (4) are provided, **in that** one of the snubber networks (3) is connected to the first voltage potential (A) of the capacitive energy storage circuit (2) and to the zero voltage potential (NP) of the capacitive energy storage circuit (2), and the other of the snubber networks (3) is connected to the second voltage potential (B) of the capacitive energy storage circuit (2) and to the zero voltage potential (NP) of the capacitive energy storage circuit (2),
**in that** one of the passive nonactuatable damping units (4) is connected to the first voltage potential (A) of the capacitive energy storage circuit (2) and to the zero voltage potential (NP) of the capacitive energy storage circuit (2), and the other of the passive nonactuatable damping units (4) is connected to the second voltage potential (B) of the capacitive energy storage circuit (2) and to the zero voltage potential (NP) of the capacitive energy storage circuit (2).

6. Converter circuit according to Claim 5, **characterized in that** the damping resistor of a respective one of the passive nonactuatable damping unit (4) is the resistor of a respective one of the snubber networks (3).

## Revendications

1. Circuit convertisseur avec une unité de conversion (1), laquelle unité de conversion (1) présente une multitude de commutateurs à semi-conducteurs de puissance pouvant être commandés et dont le côté de la tension continue est relié à un circuit capacitif d'alimentation de l'énergie (2) ;
dans lequel le circuit capacitif d'accumulation de l'énergie (2) présente au moins un accumulateur d'énergie capacitif et au moins un réseau de décharge (3) en vue de la limitation de la vitesse de croissance du courant, respectivement de la vitesse de croissance de la tension au niveau des commutateurs à semi-conducteurs de puissance pouvant être commandées de l'unité de conversion (1),
**caractérisé en ce que**
le circuit capacitif d'accumulation de l'énergie (2) présente au moins une unité d'atténuation (4) passive qui ne peut pas être commandée, avec une direction unidirectionnelle de la conduite du courant ;
dans lequel l'unité d'atténuation (4) passive qui ne peut pas être commandée sert à l'atténuation des fluctuations indésirables en cas de survenance d'une surintensité dans le circuit capacitif d'accumulation de l'énergie (2) et l'unité d'atténuation (4) passive qui ne peut pas être commandée présente une diode et une résistance d'atténuation ;
**caractérisé en ce que** le réseau de décharge (3) présente une résistance, une inductance, une capacité et une diode ; dans lequel la résistance du réseau de décharge (3) et la diode du réseau de décharge (3) sont montées en série, le circuit en série de la résistance du réseau de décharge (3) est connecté avec la diode du réseau de décharge (3), parallèlement à l'inductance du réseau de décharge (3) et la capacité du réseau de décharge (3) avec le point de connexion de la résistance du réseau de décharge est reliée (3) à la diode du réseau de décharge (3).

2. Circuit convertisseur selon la revendication 1, **caractérisé en ce que** la diode de l'unité d'atténuation (4) passive qui ne peut pas être commandée est montée en série avec la résistance d'atténuation de l'unité d'atténuation (4) passive qui ne peut pas être commandée.

3. Circuit convertisseur selon la revendication 1 ou 2, **caractérisé en ce que** dans le cas d'un circuit d'accumulation capacitif de l'énergie (2) avec un premier et un deuxième potentiel de tension (A, B), le réseau de décharge (3) est relié avec le premier et le deuxième potentiel de tension (A, B) du circuit capacitif d'accumulation de l'énergie (2) ; et
**caractérisé en ce que** l'unité d'atténuation (4) passive qui ne peut pas être commandée est reliée avec le premier et le deuxième potentiel de tension (A, B) du circuit capacitif d'accumulation de l'énergie (2).

4. Circuit convertisseur selon l'une des revendications 1 à 3, **caractérisé en ce que** la résistance d'atténuation de l'unité d'atténuation (4) passive qui ne peut pas être commandée est la résistance du réseau de décharge (3).

5. Circuit convertisseur selon la revendication 1, **caractérisé en ce que** dans le cas d'un circuit capacitif d'accumulation de l'énergie (2) avec un premier et un deuxième potentiel de tension (A, B), ainsi qu'avec un potentiel de tension zéro (NP), deux réseaux de décharge (3) et deux unités d'atténuation (4) passives qui ne peuvent pas être commandées sont prévues ;
**caractérisé en ce que** l'un des réseaux de décharge (3) est relié avec le premier potentiel de tension (A) du circuit capacitif d'accumulation de l'énergie (2) et avec le potentiel de tension zéro (NP) du circuit capacitif d'accumulation de l'énergie (2), d'une part, et l'autre réseau de décharge (3) est relié avec le deuxième potentiel de tension (B) du circuit capacitif d'accumulation de l'énergie (2) et avec le potentiel de tension zéro (NP) du circuit capacitif d'accumulation de l'énergie (2), d'autre part ;
**caractérisé en ce que** l'une des unités d'atténuation (4) passives qui ne peuvent pas être commandées est reliée avec le premier potentiel de tension (A) du circuit capacitif d'accumulation de l'énergie (2) et avec le potentiel de tension zéro (NP) du circuit capacitif d'accumulation de l'énergie (2), d'une part, et l'autre unité d'atténuation (4) passive qui ne peut pas être commandée est reliée avec le deuxième potentiel de tension (B) du circuit capacitif d'accumulation de l'énergie (2) et avec le potentiel de tension zéro (NP) du circuit capacitif d'accumulation de l'énergie (2), d'autre part.

6. Circuit convertisseur selon la revendication 5, **caractérisé en ce que** la résistance d'atténuation de respectivement l'une de l'unité d'atténuation (4) passive qui ne peuvent pas être commandées est la résistance de respectivement l'un des réseaux de décharge (3).
